(19) Europäisches Patentamt
European Patent Office
Office européen des brevets

(11) **EP 1 714 401 B1**

(12) **EUROPÄISCHE PATENTSCHRIFT**

(45) Veröffentlichungstag und Bekanntmachung des Hinweises auf die Patenterteilung:
**29.12.2010 Patentblatt 2010/52**

(21) Anmeldenummer: **05701379.9**

(22) Anmeldetag: **08.02.2005**

(51) Int Cl.:
***H04B 7/06*** (2006.01)

(86) Internationale Anmeldenummer:
**PCT/EP2005/001250**

(87) Internationale Veröffentlichungsnummer:
**WO 2005/078956 (25.08.2005 Gazette 2005/34)**

(54) **VERFAHREN UND VORRICHTUNG ZUM BETRIEB VON MIMO-LUFTSCHNITTSTELLEN BEI MOBILKOMMUNIKATIONSSYSTEMEN**

METHOD AND DEVICE FOR OPERATING MIMO AIR INTERFACES IN MOBILE COMMUNICATIONS SYSTEMS

PROCEDE ET DISPOSITIF D'EXPLOITATION D'INTERFACES MIMO DANS DES SYSTEMES DE COMMUNICATION MOBILE

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **10.02.2004 DE 102004006584**

(43) Veröffentlichungstag der Anmeldung:
**25.10.2006 Patentblatt 2006/43**

(73) Patentinhaber: **T-Mobile Deutschland GmbH**
**53227 Bonn (DE)**

(72) Erfinder: **KRUSE, Gerhard**
**53578 Windhagen (DE)**

(74) Vertreter: **Riebling, Peter**
**Patentanwalt**
**Postfach 31 60**
**88113 Lindau (DE)**

(56) Entgegenhaltungen:
**EP-A- 0 656 697     EP-A- 1 003 297**
**US-A1- 2003 072 382     US-B1- 6 324 407**
**US-B1- 6 658 269**

## Beschreibung

Die Erfindung betrifft ein Verfahren und eine Vorrichtung zum Betrieb von MIMO-Luftschnittstellen bei Mobilkommunikationssystemen, nach dem Oberbegriff der unabhängigen Patentansprüche.

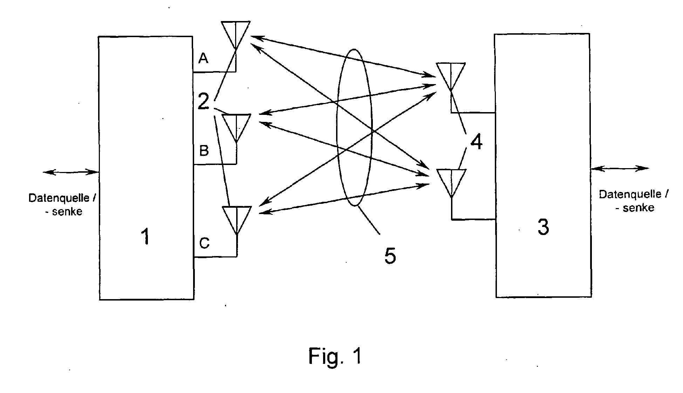

MIMO- (Multiple-Input Multiple-Output) Systeme sind vielversprechende neue Funkübertragungstechniken für künftige Mobilfunkgenerationen "Beyond 3G". Bei MIMO-Systemen werden auf dem Funk-Übertragungsweg ein oder mehrere HF-modulierte Signale von einer Anzahl m MI-Antennen abgestrahlt und von einer Anzahl n MO-Antennen empfangen. Ein MIMO-Kanal wird somit aus m Sendeantennen, n Empfangsantennen und einer Vielzahl von im Allgemeinen zeitvarianten Subkanälen zwischen den Sende- und Empfangsantennen, die auch als Diversity-Kanäle aufgefasst werden können, gebildet. In Figur 1 ist beispielhaft eine Mobilfunkverbindung mit einer Sendeeinrichtung 1, beispielsweise eine Basisstation, die im wesentlichen einen Modulator/Demodulator für die Datenquelle/-senke, einen MIMO-Prozessor und eine HF-Sende-/Empfangsstufe enthält, drei von Funksignalen A, B, C gespeiste MI-Antennen 2 , einer Empfangseinrichtung 3, beispielsweise eine mobile Station, mit grundsätzlich den gleichen Elementen wie Sendeeinrichtung 1, zwei MO-Antennen 4 und Subkanälen 5 dargestellt. Wenn die Subkanäle statistisch unabhängig sind, wächst die Wahrscheinlichkeit, das Sendesignal fehlerfrei zu empfangen mit der Anzahl der Antennen. Für die optimale Kombination der MIMO-Subkanäle, die mit den MIMO-Prozessoren realisiert wird, sind viele Verfahren und Algorithmen sowohl auf der Sender- als auch auf der Empfängerseite bekannt, beispielsweise in WO 03 041300 A1.

Die Vorteile von MIMO-Verfahren bestehen in einer deutlich effizienteren Frequenznutzung gegenüber bisherigen Verfahren (z. B. 2G, 3G), einer reduzierten EMVU-Belastung durch geringere Sendeleistungen sowie einer hohen Robustheit gegen Fading, siehe z.B. BLAST (Bell Labs Layered Space Time) -Technologie. Vorteilhaft werden MIMO-Systeme bei orthogonalen Vielfach-Zugriffsverfahren, wie ODMA, TDMA, FDMA oder Kombinationen aus diesen, angewandt.

Optimale Ergebnisse werden mit MIMO im Rayleigh-Kanal, d.h. Empfang nur durch Streuung, erreicht. Die Effizienz von MIMO- Systemen beruht auf der statistischen Unabhängigkeit der MIMO-Subkanäle.

Die vorliegende Erfindung betrifft die MIMO-Luftschnittstellen, speziell die Antennen. Unter der Voraussetzung der Reziprozität des Funkkanals ergeben sich gleiche Verhältnisse für die umgekehrte Übertragungsrichtung.

Dicht benachbarte Antennen gleicher Polarisation haben eine hohe Korrelation der gesendeten oder empfangenen Signale mit dem komplexen Korrelationsfaktor $\underline{r}$. Um mittels Raum-Diversity signifikante Dekorrelationen mit z.B. $|\underline{r}| < 0{,}2$ zu erreichen, sind bei herkömmlichen Mobilfunk-Feststationsantennen mit vertikaler Polarisation und Öffnungswinkeln von 60° in der Horizontalebene und 20° in der Vertikalebene Antennenabstände von mehr als ca. 20 $\lambda$ horizontal und mehr als ca. 3 $\lambda$ vertikal erforderlich. Raum-Diversity erfordert große Abmessungen und ist daher für mobile Geräte wenig geeignet.

Eine Lösung bieten Polarisations-Diversity-Verfahren. Diese sind für MIMO-Systeme z.B. in WO 02/058187 A1, WO 02/099995 A2 und US 6 049 705 A (hier speziell für mobile Funkgeräte) veröffentlicht.

Die beschriebenen Übertragungseinrichtungen arbeiten mit unveränderlicher, orthogonaler Polarisation der einzelnen MI- und MO-Antennen. Diese Anordnungen haben den Nachteil, dass für jeden MIMO-Subkanal eine Antenne benötigt wird.

US 2003/0072382 A1 beschreibt ein "Raum-Zeit-Kommunikationssystem zum Betrieb von MIMO-Luftschnittstellen, bei dem ein Funksignal über einen eine Anzahl von Subkanälen umfassenden MIMO-Kanal von einer Sendeeinrichtung ausgesendet und von einer Empfangseinrichtung empfangen wird, wobei den auf den Subkanälen auszusendenden und zu empfangenden Funksignalen unterschiedliche Polarisationen zugewiesen werden. Auch her wird für jedes Funksignal eines Subkanals eine Antenne benötigt.

US 6 658 269 B1 und EP 1 003 297 A2 offenbaren drahtlose Kommunikationssysteme mit einem Diversity-Antennensystem, mit dem mehrere Funksignale unterschiedlicher Polarisation ausgestrahlt werden. Jedem unterschiedlich polarisierten Funksignal wird dabei genau eine Antenne des Antennensystems zugewiesen.

Es ist die Aufgabe der Erfindung, ein Verfahren und eine Anordnung zum Betrieb vom Luftschnittstellen bei Mobilkommunikationssystemen anzugeben, bei der der Platzbedarf für Antennen und die Dekorrelation der Subkanäle auf der Luftschnittstelle deutlich verbessert werden.

Diese Aufgabe wird erfindungsgemäß durch die Merkmale der unabhängigen Patentansprüche gelöst.

Die Erfindung zeichnet sich dadurch aus, dass den auf den Subkanälen auszusendenden und zu empfangenden Funksignalen unterschiedliche Polarisationen zugewiesen werden, und die Funksignale aller Subkanäle gemeinsam einer aus mehrere räumlich eng benachbarten Teilantennen gebildeten Antenne superpositioniert zugeführt werden.

In einer bevorzugten Ausgestaltung der Erfindung wird als Antenne ein Kreuzdipol verwendet. Vorzugsweise fallen die Phasenzentren der Teilantennen zusammen.

Die Zuweisung der Polarisationen der auf den Subkanälen ausgesendeten Funksignale wird vorzugsweise von einer Steuerungseinrichtung gesteuert. Dabei werden die Polarisationen der auf den Subkanälen ausgesendeten in vorgegebenen Zeitabständen geändert, vorzugsweise synchron geändert. Eine Möglichkeit ist, die Polarisationen der auf den Subkanälen ausgesendeten Funksignale in vorgegebenen Zeitabständen untereinander zu vertauschen.

Es kann aber auch vorgesehen sein, jedem auf den Subkanälen ausgesendeten Funksignal eine aus einer Menge von vorgegebenen Polarisationen jeweils eine zufällig ausgewählte Polarisation zuzuweisen. Dabei darf keine Polarisation doppelt vergeben werden.

Für den Fall, dass das auf dem MIMO-Kanal ausgesendete Funksignal durch einen digitalen Datenstrom moduliert ist, werden die Polarisationswechsel derart gesteuert, dass die Polarisationen der auf den Subkanälen ausgesendeten Funksignale für die Zeitdauer von mindestens einem Bit des Datenstroms gleich bleiben. Die Polarisationswechsel können aber auch derart gesteuert werden, dass die Polarisationen der auf den Subkanälen ausgesendeten Funksignale während der Dauer eines Bits des Datenstroms mindestens einmal wechseln.

Die Steuerungseinrichtung nimmt Ober entsprechende Einrichtungen, wie Phasenschieber, Verzögerungsleitungen, Leistungsteiler, Einfluss auf die Polarisation der auf den Subkanälen ausgesendeten Funksignale, wobei die Polarisationen durch das Verhältnis der Beträge ihrer Leistungen a bzw. (1-a) und/oder ihre gegenseitige Phasenlage und/oder ihren Zeitversatz $\tau_1$, $\tau_2$ bestimmt werden. Die Anzahl der schaltbaren Polarisationen muss mindestens so groß sein, wie die Anzahl m der Subkanäle.

Erfindungsgemäß werden mit je einer Antenne, die mehrere Polarisationen gleichzeitig abstrahlen bzw. empfangen kann, viele unkorrelierte MI- und MO-Subkanäle realisiert. Der Vorteil von MIMO-Verfahren, der bisher nur mit mehreren räumlich verteilten Antennen erreicht wurde, wird gemäß der Erfindung mit nur einer Antenne erzielt. Vorzugsweise können die Beträge der zeitlich gemittelten Korrelationsfaktoren r der MIMO-Kanäle verringert werden, indem die Polarisationen der Antennen ständig geändert werden, wobei die Polarisationen bei einem digital modulierten Funksignal

- über mindestens ein Bit gleich bleibt oder
- mindestens einmal pro Bit wechselt.

Wenn die Subkanäle CDMA-Kanäle sind, beziehen sich die Polarisationswechsel auf einen Chip.

Im Folgenden werden einfache Ausführungsbeispiele der Erfindung anhand der Zeichnungsfiguren näher erläutert.

Figur 1    zeigt beispielhaft den generellen Aufbau eines MIMO- Kommunikationsystems nach dem Stand der Technik;

Figur 2    zeigt beispielhaft einen erfindungsgemäßen Aufbau eines MIMI-Kommunikationsystems;

Figur 3    zeigt die Anwendung von Y-Zirkulatoren bei dem Aufbau gemäß Figur 2;

Figur 4    zeigt ein spezielles Ausführungsbeispiel eines erfindungsgemäßen MIMO-Kommunikationssystems unter Verwendung eines Kreuzdipols.

Figur 5    zeigt eine Darstellung des elektrischen Feldes einer sich in z-Richtung, das heißt senkrecht zur Dipolebene, ausbreitenden Welle eines Kreuzdipols.

Erfindungsgemäß wird die Dekorrelation der Subkanäle eines MIMO-Funksignals durch Polarisationsentkopplung erreicht. Die Polarisation einer ebenen elektromagnetischen Welle ist allgemein links- oder rechtsdrehend elliptisch, in Sonderfällen linear oder zirkular. Die Drehrichtung der Polarisation ist nach IEEE rechts-drehend definiert, wenn die Spitze des elektrischen Feldvektors vom Sender aus betrachtet im Uhrzeigersinn dreht. Dieser Definition liegt die zeitliche Abhängigkeit des elektrischen Feldvektors an einem festen Ort zugrunde.

Die Funksignale A, B, C aus der Sendeeinrichtung 1 gemäß Figur 1 werden, statt auf mehrere Antennen, nur auf eine Antenne geführt, die die Funksignale mit m unterschiedlichen Polarisationen superpositioniert und abstrahlt. Damit wird die Einsparung von räumlich versetzten Antennen erreicht. Die Antenne besteht aus einem Antennenarray mit mehreren räumlich dicht beieinander liegenden Teilantennen.

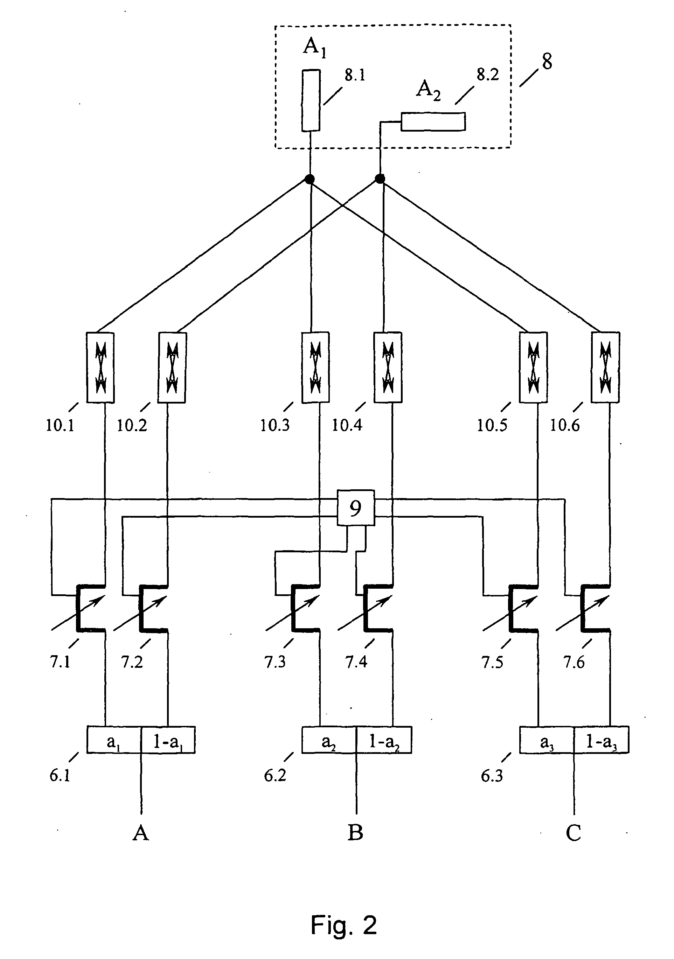

Im Ausführungsbeispiel nach Figur 2 werden die Funksignale A, B, C der in Figur 1 gezeigte Sendeeinrichtung 1 mit Leistungsteilern 6.1 bis 6.3 auf jeweils zwei Zweige mit den normierten Leistungen $a_i$ und $(1-a_i)$ mit $0 \le a_i \le m$ aufgeteilt. Beide Verteilerausgänge jedes MI-Subkanals mit den Leistungen $a_i$ und $(1-a_i)$ werden um die Zeiten $\tau_{i1}$ und $\tau_{i2}$ mittels Verzögerungsleitungen 7.1 bis 7.6, die z.B. aus schaltbaren Leitungsstücken oder Phasenschiebern bestehen können, verzögert. Durch je eine Verzögerung in beiden Zweigen eines MI-Subkanals, wobei im Allgemeinen $\tau_{i1} = 0$ oder $\tau_{i2} = 0$ gesetzt wird, kann die Welle wahlweise in jedem Zweig voreilen; dadurch kann mit der Antenne 8 links- oder rechtsdrehende Polarisation erzeugt werden. Entsprechend der Einstellungswerte von $a_i$, $\tau_{i1}$ und $\tau_{i2}$ können Wellen mit beliebiger Lage und Drehsinn der Polarisationsellipse, einschließlich der Ausartung zur Geraden, gesendet werden.

Um die gegenseitige Rückwirkung der MI-Subkanäle zu vermeiden, werden die beiden Zweige für jeden MI-Kanal über Richtkoppler 10.1 bis 10.6 auf die Antenne geführt. Die Wellen aus den Zweigen 1 der Richtkoppler 10.1, 10.3 und 10.5 werden in einer z.B. linear polarisierten Teilantenne $A_1$ überlagert, die aus den Zweigen 2 der Richtkoppler 10.2, 10.4 und 10.6 in einer Teilantenne $A_2$ mit orthogonaler Polarisation. Die Teilantennen $A_1$ und $A_2$ sind sehr dicht benachbart und bilden ein Antennenarray. Vorzugsweise fallen die Phasenzentren der Teilantennen zusammen. Als Antennen können linear oder zirkular polarisierte Antennen mit orthogonaler Polarisation oder Hornstrahler mit geeignetem Anregungsmode verwendet werden.

Die Umschaltung der Polarisation der MI-Antenne erfolgt über mehrere Bits oder mehrmals pro Bit und wird durch eine Steuerungseinrichtung 9 gesteuert.

Für die Polarisationswechsel sind vorzugsweise zwei Algorithmen vorgesehen:

1. Synchrone, zyklische Umschaltung aller MI-Kanäle (Polarisation von MI-Kanal A wird nach einer Verweilzeit auf MI-Kanal B geschaltet; Polarisation von MI-Kanal B wird auf MI-Kanal C geschaltet usw.)
2. Durch Zufall erzeugte Polarisation der MI-Kanäle.

Die Polarisationen der MI-Subkanäle können z.B. sein: horizontal, vertikal, lineare Polarisation unter 45° und 135° zum Erdboden, zirkular links-/rechtsdrehend, elliptisch links-/rechtsdrehend (mit wählbarem Achsenverhältnis und Lage zum Erdboden) usw. Die Anzahl der schaltbaren Polarisationszustände soll mindestens so groß wie die Anzahl m der MI-Subkanäle sein.

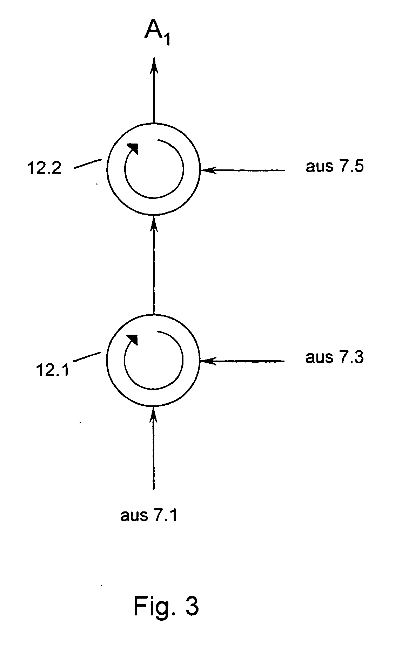

Um die gegenseitige Rückwirkung der MI-Subkanäle zu vermeiden, werden die beiden Zweige für jeden MI-Kanal zur Antenne über Richtkoppler 10.1 bis 10.6 auf die Antennenteile $A_1$ und $A_2$ geführt. Alternativ können bei zwei MI-Kanälen zwei Y-Zirkulatoren und für m > 2 kaskadierte Y-Zirkulatoren zum Zusammenschalten der MI-Antennen verwendet werden Figur 3.

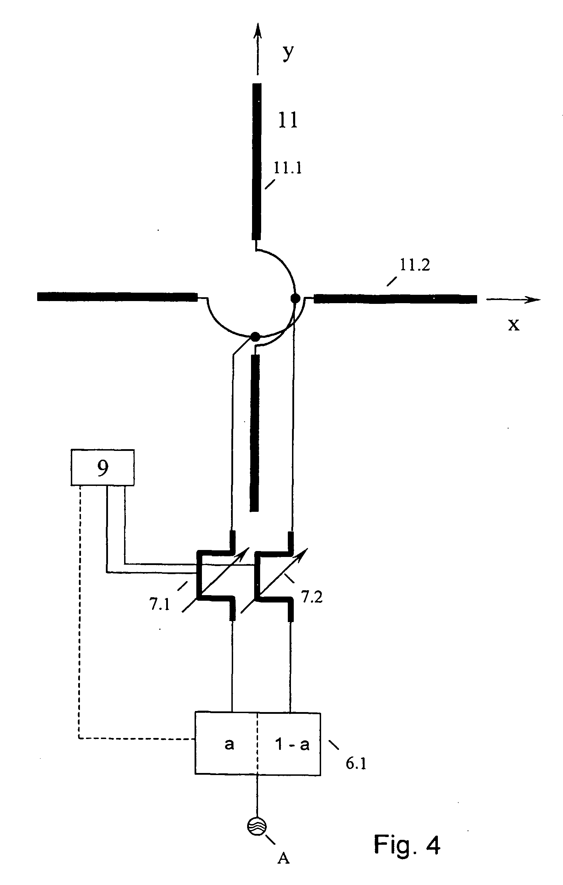

Als Ausführungsbeispiel für die Dekorrelation von MI-Subkanälen mit einer Antenne sei als einfaches Ausführungsbeispiel ein Kreuzdipol 11 betrachtet Figur 4. Ein Kreuzdipol wird als eine Zusammenschaltung von zwei linear polarisierten, orthogonalen Dipolen 11.1 und 11.2 betrachtet, deren Phasenzentren zusammenfallen.

Als Richtantenne kann der Kreuzdipol vor einem Reflektor angeordnet werden.

Dipole haben die Vorteile

- einfacher konstruktiver Aufbau
- Breitbandigkeit durch entsprechende Formgebung der Dipole (z.B. Verhältnis Durchmesser/Länge bei zylindrischen Dipolen)

Die Leistung einer Sendeeinrichtung 1 wird im Leistungsteiler 6.1 (vgl. auch Figur 2) auf die Leistungsanteile a und (1 - a) aufgeteilt, Nach der Verzögerung der beiden Signalkomponenten um $\tau_1$ bzw. $\tau_2$ in den Verzögerungsleitungen 7.1 und 7.2 werden die Funksignale auf die beiden Dipole 11.1 und 11.2 geführt. Bei praktischen Ausführungen beträgt die Gesamtlänge eines Dipols im Allgemeinen ca. $\lambda/2$.

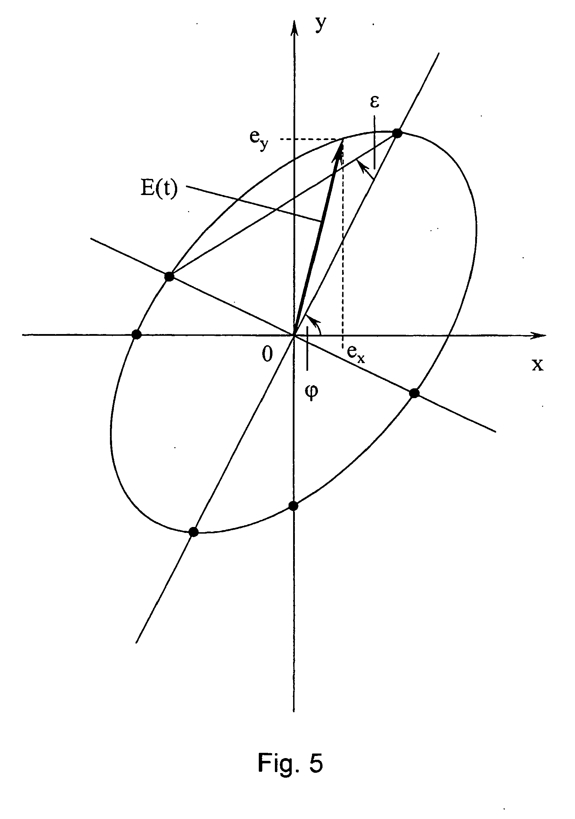

Das elektrische Feld einer sich in z-Richtung, das heißt senkrecht zur Dipolebene, ausbreitenden Welle des Kreuzdipols 11 wird nach Figuren 4 und 5 beschrieben durch den zweidimensionalen Vektor:

$$\underline{E(t)} = \underline{e_x} \cdot a \cdot \cos(\omega \cdot t - k \cdot z + \delta_x) + \underline{e_y} \cdot (1 - a) \cdot \cos(\omega \cdot t - k \cdot z + \delta_y)$$

mit der Wellenzahl $k = 2\pi/\lambda$ und der Phase $\delta = 2 \cdot \pi \cdot c \cdot \tau_i/\lambda$.

Folgende Polarisationen der MIMO-Antennen sind mit den Einstellungen $\tau_1$, $\tau_2$ und a beispielhaft möglich (s. z.B. Kraus, John D.: "Antennas", 1950, und Schrott/Stein: "Bedeutung und Beschreibung der Polarisation elektromagnetischer Wellen", 1980):

**Tabelle 1**

| a | 1 | 0 | 0,5 | 0,5 | <1 | <1 | 0,5 | 0,5 | 0,5 | 0,5 |
|---|---|---|-----|-----|-----|-----|-----|-----|-----|-----|
| $\tau_1$ | bel | bel | $\lambda/4 \cdot c$ | 0 | $\lambda/4 \cdot c$ | 0 | $\lambda/2 \cdot c$ | 0 | $< \lambda/2 \cdot c$ | 0 |
| $\tau_2$ | bel | bel | 0 | $\lambda/4 \cdot c$ | 0 | $\lambda/4 \cdot c$ | 0 | 0 | 0 | $< \lambda/2 \cdot c$ |
| Pol | hor | vert | zir-re | zir-li | eil-re | all-li | 45° | 135° | eil-re | ell-li |

(Pol: Polarisation, bel: beliebig; hor: horizontal; vert: vertikal; zir-li: linkszirkular; zir-re: rechtszirkular; ell-li: elliptisch linksdrehend; ell-re: elliptisch rechtsdrehend; 45°: linear unter 45° zum Erdboden; 135°: dsgl. unter 135°)

Der Orientierungswinkel φ der Ellipsenhauptachse bezüglich des Erdbodens beträgt:

$$tan2\varphi = 2a(a - 1)/(a^2 - (1 - a)^2)\cdot cos\delta$$

mit der Phase des Polarisationsverhältnisses $\delta = \beta_y - \beta_x$.

Der Elliptizitätswinkel $\varepsilon$ als Maß für das Achsenverhältnis der Ellipse (Tangens der Achsen) wird bestimmt aus:

$$tan2\varepsilon = tan\delta\cdot sin2\varphi.$$

Damit ist die Form und Lage der Polarisationsellipse durch a und $\tau_1$ festgelegt.

Vorteilhaft ist, dass elliptisch Polarisationen sowohl durch die Aufteilung a bzw. (1-a) der Sendeleistung und der Verzögerungszeiten $\tau_i$ (Phasenlage) der Funksignale, als auch, in engeren Grenzen, nur durch $\tau$ gesteuert werden können, wenn 0 < a < 1 gewählt wird (siehe Tabelle 1).

## Liste der Bezugszeichen

1 Sendeeinrichtung (Basisstation)
2 MI-Antenne
3 Empfangseinrichtung (mobile Station)
4 MO-Antenne
5 Subkanäle
6 Leistungsteiler (6.1-6.3)
7 Verzögerungsleitungen (7.1-7.6)
8 Antenne (8.1, 8.2)
9 Steuerungseinrichtung
10 Richtkoppler (10.1-10.6)
11 Kreuzdipol (11.1, 11.2)
12 Y-Zirkulator (12.1, 12.2)

## Patentansprüche

1. Verfahren zum Betrieb von MIMO-Luftschnittstellen bei Mobilkommunikationssystemen, bei dem ein Funksignal (A; B; C) über einen eine Anzahl von m Subkanälen (5) umfassenden MIMO-Kanal von einer Sendeeinrichtung (1) ausgesendet und von einer Empfangseinrichtung (3) empfangen wird, wobei den auf den Subkanälen (5) auszusendenden und zu empfangenden Funksignalen unterschiedliche Polarisationen zugewiesen werden, **dadurch gekennzeichnet, dass** die Funksignale aller Subkanäle gemeinsam einem Antennenarray (8,11) mit mehreren räumlich eng benachbarten Teilantennen (8.1, 8.2; 11.1, 11.2) superpositioniert zugeführt werden.

2. Verfahren nach Anspruch 1, **dadurch gekennzeichnet, dass** die Phasenzentren der Teilantennen (8.1, 8.2; 11.1, 11.2) zusammenfallen.

3. Verfahren nach einem der vorhergehenden Ansprüche, **dadurch gekennzeichnet, dass** die Zuweisung der Polarisationen der auf den Subkanälen (5) ausgesendeten Funksignale von einer Steuerungseinrichtung (9) gesteuert wird.

4. Verfahren nach einem der vorhergehenden Ansprüche, **dadurch gekennzeichnet, dass** die Polarisationen der auf den Subkanälen (5) ausgesendeten in vorgegebenen Zeitabständen geändert werden.

5. Verfahren nach einem der vorhergehenden Ansprüche, **dadurch gekennzeichnet, dass** die Polarisationen der auf den Subkanälen (5) ausgesendeten Funksignalen synchron geändert werden.

6. Verfahren nach einem der vorhergehenden Anspruche, **dadurch gekennzeichnet, dass** die Polarisationen der

EP 1 714 401 B1

auf den Subkanälen (5) ausgesendeten Funksignale in vorgegebenen Zeitabständen untereinander vertauscht werden.

**7.** Verfahren nach einem der vorhergehenden Ansprüche, **dadurch gekennzeichnet, dass** jedem auf den Subkanälen (5) ausgesendeten Funksignal eine aus einer Menge von vorgegebenen Polarisationen zufällig ausgewählte Polarisation zugewiesen wird.

**8.** Verfahren nach einem der vorhergehenden Ansprüche, **dadurch gekennzeichnet, dass** das auf dem MIMO-Kanal ausgesendete Funksignal (A; B; C) durch einen digitalen Datenstrom moduliert ist, wobei die Polarisationen der auf den Subkanälen (5) ausgesendeten Funksignale für die Zeitdauer von mindestens einem Bit des Datenstroms gleich bleiben.

**9.** Verfahren nach einem der vorhergehenden Ansprüche, **dadurch gekennzeichnet, dass** das auf dem MIMO-Kanal ausgesendete Funksignal (A; B; C) durch einen digitalen Datenstrom moduliert ist, wobei die Polarisationen der auf den Subkanälen (5) ausgesendeten Funksignale während der Dauer eines Bits des Datenstroms mindestens einmal wechseln.

**10.** Verfahren nach einem der vorhergehenden Ansprüche, **dadurch gekennzeichnet, dass** die Polarisation der auf den Subkanälen (5) ausgesendeten Funksignale durch das Verhältnis der Beträge ihrer Leistungen a bzw. (1-a) und/oder ihre gegenseitige Phasenlage und/oder ihren Zeitversatz ($\tau_1$, $\tau_2$) bestimmt wird.

**11.** Verfahren nach einem der vorhergehenden Ansprüche, **dadurch gekennzeichnet, dass** die Anzahl der schaltbaren Polarisationen mindestens so groß ist wie die Anzahl m der Subkanäle (5).

**12.** Vorrichtung zum Betrieb von MIMO-Luftschnittstellen bei Mobilkommunikationssystemen, mit einer Sendeeinrichtung (1) zum Aussenden eines Funksignals (A; B; C) über einen ein Anzahl m Subkanäle (5) umfassenden MIMO-Kanal, einer Empfangseinrichtung (3) zum Empfang des Funksignals, und Einrichtungen zur Zuweisung von unterschiedlichen Polarisationen zu den auf den Subkanälen (5) ausgesendeten und zu empfangenden Funksignale, **gekennzeichnet durch** ein aus mehreren räumlich eng benachbarten Teilantennen (8.1, 8.2; 11.1, 11.2) gebildetes Antennenarray (8; 11), der alle unterschiedlich polarisierten Funksignale der Subkanäle (5) superpositioniert zugeführt werden.

**13.** Vorrichtung nach Anspruch 12, **dadurch gekennzeichnet, dass** die Phasenzentren der Teilantennen (8.1, 8.2; 11.1, 11.2) zusammenfallen.

**14.** Vorrichtung nach einem der Ansprüche 12 oder 13, **dadurch gekennzeichnet, dass** die Antenne (11) ein Kreuzdipol ist.

**15.** Vorrichtung nach einem der Ansprüche 12 bis 14, **dadurch gekennzeichnet, dass** die Einrichtungen Mittel (7; 12) zur Veränderung der Phasenlage und/oder des Zeitversatzes ($\tau$) der Funksignale umfassen.

**16.** Vorrichtung nach einem der Ansprüche 12 bis 15, **dadurch gekennzeichnet, dass** die Einrichtungen Mittel (6) zur Aufteilung des Funksignals in mehrere Teilsignale unterschiedlicher Leistung a und 1-a umfasst.

**17.** Vorrichtung nach einem der Ansprüche 12 bis 16, **dadurch gekennzeichnet, dass** eine Steuerungseinrichtung (9) zur Steuerung der Einrichtungen (6; 7; 12) vorgesehen ist.

**Claims**

**1.** Method for operating MIMO air interfaces in mobile communications systems, in which a radio signal (A; B; C) is emitted by a transmitting device (1) and received by a receiving device (3) via a MIMO channel comprising a number of m subchannels (5), the radio signals to be emitted and received on the subchannels (5) being allocated different polarisations, **characterised in that** the radio signals of all subchannels are delivered together in superimposed fashion to an aerial array (8, 11) having several partial aerials (8.1, 8.2; 11.1, 11.2) which are spatially closely adjacent.

**2.** Method according to claim 1, **characterised in that** the phase centres of the partial aerials (8.1, 8.2; 11.1, 11.2) coincide.

6

3. Method according to one of the preceding claims, **characterised in that** allocation of the polarisations of the radio signals emitted on the subchannels (5) is controlled by a control device (9).

4. Method according to one of the preceding claims, **characterised in that** the polarisations of the radio signals emitted on the subchannels (5) are altered at predetermined intervals of time.

5. Method according to one of the preceding claims, **characterised in that** the polarisations of the radio signals emitted on the subchannels (5) are altered synchronously.

6. Method according to one of the preceding claims, **characterised in that** the polarisations of the radio signals emitted on the subchannels (5) are reversed with each other at predetermined intervals of time.

7. Method according to one of the preceding claims, **characterised in that** each radio signal emitted on the subchannels (5) is allocated a polarisation randomly selected from a quantity of predetermined polarisations.

8. Method according to one of the preceding claims, **characterised in that** the radio signal (A; B; C) emitted on the MIMO channel is modulated by a digital data stream, the polarisations of the radio signals emitted on the subchannels (5) remaining the same for the duration of at least one bit of the data stream.

9. Method according to one of the preceding claims, **characterised in that** the radio signal (A; B; C) emitted on the MIMO channel is modulated by a digital data stream, the polarisations of the radio signals emitted on the subchannels (5) changing at least once during the length of a bit of the data stream.

10. Method according to one of the preceding claims, **characterised in that** the polarisation of the radio signals emitted on the subchannels (5) is determined by the ratio of the quantities of their power a or (1-a) and/or their mutual phase relationship and/or their time offset ($\tau_1$, $\tau_2$).

11. Method according to one of the preceding claims, **characterised in that** the number of switchable polarisations is at least as great as the number m of subchannels (5).

12. Apparatus for operating MIMO air interfaces in mobile communications systems, having a transmitting device (1) for emitting a radio signal (A; B; C) via a MIMO channel comprising a number m of subchannels (5), a receiving device (3) for receiving the radio signal, and devices for allocating different polarisations to the radio signals emitted and to be received on the subchannels (5), **characterised by** an aerial array (8; 11) which is composed of several partial aerials (8.1, 8.2; 11.1, 11.2) that are spatially closely adjacent, and to which all the differently polarised radio signals of the subchannels (5) are delivered in superimposed fashion.

13. Apparatus according to claim 12, **characterised in that** the phase centres of the partial aerials (8.1, 8.2; 11.1, 11.2) coincide.

14. Apparatus according to one of claims 12 or 13, **characterised in that** the aerial (11) is a turnstile aerial.

15. Apparatus according to one of claims 12 to 14, **characterised in that** the devices comprise means (7; 12) for altering the phase relationship and/or the time offset ($\tau$) of the radio signals.

16. Apparatus according to one of claims 12 to 15, **characterised in that** the devices comprise means (6) for dividing the radio signal into several partial signals having different power a and 1-a.

17. Apparatus according to one of claims 12 to 16, **characterised in that** the control device (9) is provided for control of the devices (6; 7; 12).

**Revendications**

1. Procédé pour exploiter des interfaces MIMO dans de systèmes de communication mobile, selon lequel un signal radio (A ; B ; C) est envoyé par un dispositif émetteur (1) par l'intermédiaire d'un canal MIMO comprenant un nombre m de sous-canaux (5) et est reçu par un dispositif récepteur (3), des polarisations différentes étant attribuées aux signaux radio à envoyer et à recevoir sur les sous-canaux (5), **caractérisé en ce que** les signaux radio de tous les sous-canaux sont transmis, en étant superposés, à un ensemble d'antennes (8, 11) avec plusieurs antennes partielles (8.1, 8.2 ; 11.1, 11.2) situées tout près les unes des autres dans l'espace.

**2.** Procédé selon la revendication 1, **caractérisé en ce que** les centres de phase des antennes partielles (8.1, 8.2 ; 11.1, 11.2) coïncident.

**3.** Procédé selon l'une des revendications précédentes, **caractérisé en ce que** l'attribution des polarisations des signaux radio envoyés sur les sous-canaux (5) est commandée par un dispositif de commande (9).

**4.** Procédé selon l'une des revendications précédentes, **caractérisé en ce que** les polarisations des signaux radio envoyés sur les sous-canaux (5) sont modifiées suivants des laps de temps prédéfinis.

**5.** Procédé selon l'une des revendications précédentes, **caractérisé en ce que** les polarisations des signaux radio envoyés sur les sous-canaux (5) sont modifiées de manière synchrone.

**6.** Procédé selon l'une des revendications précédentes, **caractérisé en ce que** les polarisations des signaux radio envoyés sur les sous-canaux (5) sont échangées entre elles suivant des laps de temps prédéfinis.

**7.** Procédé selon l'une des revendications précédentes, **caractérisé en ce qu'**à chaque signal radio envoyé sur les sous-canaux (5) est attribuée une polarisation choisie de manière aléatoire parmi une certaine quantité de polarisations prédéfinies.

**8.** Procédé selon l'une des revendications précédentes, **caractérisé en ce que** le signal radio (A ; B ; C) envoyé sur le canal MIMO est modulé par un flux de données numériques, les polarisations des signaux envoyés sur les sous-canaux (5) restant les mêmes pendant la durée d'au moins un bit du flux de données.

**9.** Procédé selon l'une des revendications précédentes, **caractérisé en ce que** le signal radio (A ; B ; C) envoyé sur le canal MIMO est modulé par un flux de données numériques, les polarisations des signaux radio envoyés sur les sous-canaux (5) changeant au moins une fois pendant la durée d'un bit du flux de données.

**10.** Procédé selon l'une des revendications précédentes, **caractérisé en ce que** la polarisation des signaux radio envoyés sur les sous-canaux (5) est définie par le rapport de leurs puissances a ou (1-a) et/ou par leur relation de phase mutuelle et/ou par leur décalage dans le temps ($\tau_1$, $\tau_2$).

**11.** Procédé selon l'une des revendications précédentes, **caractérisé en ce que** le nombre de polarisations commutables est au moins aussi grand que le nombre m de sous-canaux (5).

**12.** Dispositif pour exploiter des interfaces MIMO dans des systèmes de communication mobile, avec un dispositif émetteur (1) pour envoyer un signal radio (A ; B ; C) par l'intermédiaire d'un canal MIMO comprenant un nombre m de sous-canaux (5), un dispositif récepteur (3) pour recevoir le signal radio, et des dispositifs pour attribuer des polarisations différentes aux signaux radio envoyés et à recevoir sur les sous-canaux (5), **caractérisé par** un ensemble d'antennes (8, 11) qui est formé de plusieurs antennes partielles (8.1, 8.2 ; 11.1, 11.2) situées tout près les unes des autres dans l'espace, et auquel tous les signaux radio des sous-canaux (5), de polarisations différentes, sont transmis en étant superposés.

**13.** Dispositif selon la revendication 12, **caractérisé en ce que** les centres de phase des antennes partielles (8.1, 8.2 ; 11.1, 11.2) coïncident.

**14.** Dispositif selon l'une des revendications 12 ou 13, **caractérisé en ce que** l'antenne (11) est une antenne croisée.

**15.** Dispositif selon l'une des revendications 12 à 14, **caractérisé en ce que** les dispositifs comprennent des moyens (7 ; 12) pour modifier la relation de phase et/ou le décalage dans le temps ($\tau$) des signaux radio.

**16.** Dispositif selon l'une des revendications 12 à 15, **caractérisé en ce que** les dispositifs comprennent des moyens (6) pour diviser le signal radio en plusieurs signaux partiels de puissances différentes a et 1-a.

**17.** Dispositif selon l'une des revendications 12 à 16, **caractérisé en ce qu'**il est prévu un dispositif de commande (9) pour commander les dispositifs (6 ; 7 ; 12).

Fig. 1

Fig. 2

$A_1$

12.2

aus 7.5

12.1

aus 7.3

aus 7.1

Fig. 3

Fig. 4

Fig. 5

**EP 1 714 401 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 03041300 A1
- WO 02058187 A1
- WO 02099995 A2
- US 6049705 A
- US 20030072382 A1
- US 6658269 B1
- EP 1003297 A2

### In der Beschreibung aufgeführte Nicht-Patentliteratur

- **Kraus, John D.** *Antennas,* 1950
- **Schrott ; Stein.** *Bedeutung und Beschreibung der Polarisation elektromagnetischer Wellen,* 1980